# EUROPÄISCHE PATENTSCHRIFT

(11) **EP 1 930 509 B1**
(45) Veröffentlichungstag und Bekanntmachung des Hinweises auf die Patenterteilung: **19.05.2010**
(21) Anmeldenummer: 07022344.1
(22) Anmeldetag: 17.11.2007
(51) Int. Cl.: E03B 7/07

(54) **Anschlusszwischenstück für den Wasserschadenschutz**
Intermediate connector piece to prevent water damage
Pièce intercalaire de raccordement pour la protection contre les dégâts des eaux

(30) Priorität: 22.11.2006 DE 102006054912
(43) Veröffentlichungstag der Anmeldung: 11.06.2008
(73) Patentinhaber: Judo Wasseraufbereitung GmbH, D-71364 Winnenden (DE)
(72) Erfinder: Söcknick, Ralf, 70806 Kornwestheim (DE); Melcher, Siegfried, 71720 Oberstenfeld (DE)
(74) Vertreter: Kohler Schmid Möbus

(56) Entgegenhaltungen:
- WO-A-97/06377
- WO-A-2004/072602
- WO-A-2004/074946
- DE-U1- 9 103 054
- US-B1- 6 216 727

## Beschreibung

Die Erfindung betrifft ein Anschlusszwischenstück zum Anbau eines Wasserbehandlungsgerätes an eine Rohrleitung eines Wassernetzes, insbesondere eines Hauswassernetzes.

Eine derartige Vorrichtung ist bekannt aus der DE 86 21 142 U.

In Rohrleitungsinstallationen für flüssige Medien - so z.B. in Trink- oder Brauchwasserinstallationsnetzen - treten immer wieder Schadensfälle durch Rohr- oder Schlauchbrüche bzw. undichte Verbindungsteile, Armaturen oder Geräte auf. Der Schaden am Installationsnetz ist in der Regel klein, groß ist hingegen häufig der Folgeschaden durch den Verlust großer Wassermengen und vor allem durch den vom ausgetretenen Wasser verursachten Wasserschaden. Die wesentliche Problematik besteht darin, eine Leckage möglichst rasch nach ihrem auftreten zu erkennen und zu beseitigen.

Entsprechende Wasserschadenschutzvorrichtungen sind beispielsweise aus US-PS 5 086 806, DE 29 18 048 A1 und DE 196 08 527 C2 bekannt. Nachteilig bei diesen Vorrichtungen ist jedoch, dass sie entweder lediglich für die Absicherung eines einzigen Gerätes konzipiert sind oder für den Einbau in die Rohrleitung eines Wassernetzes ein separater Anschluss an die Rohrleitung notwendig ist. Die Montage ist dann aufwändig und teuer. Zudem ist ein entsprechender Platzbedarf zu berücksichtigen, der in der zentralen Zuleitung oft schon durch andere Wasserbehandlungsanlagen wie Filter, Enthärter und Dosierpumpen belegt ist.

Ein in DE 91 03 054 U beschriebenes Anschlussstück für einen Filter enthält ein Ventil und einen Durchflussmesser zur Überwachung der Standzeit des Filters. Das Anschlussstück muss jedoch extra in die Rohrleitung eingebaut werden. Bereits vorhandene Anschlussarmaturen für Wasserbehandlungsgeräte können für eine einfache und platzsparende Montage nicht verwendet werden. Zudem offenbart DE 91 03 054 U keine Details bezüglich der Ausführung und Einbaulage von Durchflussmesser und Ventil im Anschlussstück. Der dort dargestellte Durchflussmesser befindet sich aufgrund der begrenzten Platzierungsmöglichkeiten unmittelbar nach einer Strömungsumlenkung, was sich nachteilig auf dessen Anlaufwert und Linearität auswirkt. Das dargestellte Anschlussstück für einen Filter ist deshalb weder als Wasserschaden-Schutzvorrichtung vorgesehen noch dafür geeignet.

DE 86 21 142 U beschreibt ein Anschlusszwischenstück zum Einbau zwischen ein in eine Wasserleitung eingebautes Anschlussstück und ein an das Anschlussstück angeschlossenes Wasserbehandlungsgerät. Diese Vorrichtung kann bequem zwischen ein in der Installation bereits vorhandenes Anschlussstück und ein daran angeschlossenes Wasserbehandlungsgerät eingebaut werden. Das Anschlusszwischenstück weist einen Rückflussverhinderer und einen Druckminderer auf, ist jedoch weder als Wasserschadenschutzvorrichtung vorgesehen noch kann es hierfür verwendet werden.

### Aufgabe der Erfindung

Es ist die Aufgabe der vorliegenden Erfindung, eine Vorrichtung vorzustellen, die als Wasserschaden-Schutzvorrichtung dienen kann und einfach und platzsparend an die Rohrleitung eines Wassernetzes montiert werden kann.

### Kurze Beschreibung der Erfindung

Diese Aufgabe wird gemäß Anspruch 1 gelöst.

Das erfindungsgemäße Anschlusszwischenstück dient als Wasserschadenschutzvorrichtung und kann an ein beliebiges, bereits vorhandenes Anschlussstück angeschlossen werden. Solche Anschlussstücke sind üblicherweise in jeder Hausinstallation beispielsweise für den Anschluss von nach DIN 1988 vorgeschriebenen Schutzfiltern vorhanden. Ein separater Anschluss ist nicht notwendig. Dadurch ist der Einbau besonders einfach und kostengünstig.
Insbesondere kann das erfindungsgemäße Anschlusszwischenstück zwischen einem in einer Rohrleitung bereits vorhandenen Anschlussstück und einem Wasserbehandlungsgerät, etwa dem vorgeschriebenen Schutzfilter, eingebaut werden. Der Einbau kann also ohne Veränderungen in der Rohrleitung bzw. dem Wassernetz erfolgen; es wird kein zusätzlicher Abschnitt der Rohrleitung durch den Einbau verbraucht. Auch kann das erfindungsgemäße Anschlusszwischenstück leicht an bestehenden Wassernetzen nachgerüstet werden.

Das Anschlusszwischenstück besitzt eine kompakte Bauweise und ist problemlos auch bei beengten Platzverhältnissen montierbar. Es schützt das angeschlossene Wasserbehandlungsgerät, die nachfolgende Installation sowie deren Umgebung vor Wasserschäden.

Bei dem erfindungsgemäßen Anschlusszwischenstück ist vorgesehen, dass wenigstens ein Kanal im Anschlusszwischenstück zumindest annähernd geradlinig verläuft und das Volumenstrommessgerät in diesem Kanal angeordnet ist. Durch die Anordnung ist eine optimale Anströmung des Volumenstrommessgerätes ohne vorherige Umlenkung der Strömung im Anschlusszwischenstück möglich. Turbulente Strömungen im Anströmbereich des Volumenstrommessgerätes werden vermieden. Der dadurch geringe Anlaufwert ist Voraussetzung, um auch kleine Leckagen sicher zu detektieren. Im zumindest annähernd geradlinigen Kanal können weitere funktionelle Elemente wie Anströmhilfen angeordnet sein.

Gemäß der Erfindung umfassen die Kanäle einen zentralen Kanal sowie einen den zentralen Kanal umgebenden Ringkanal,
wobei das Verschlussorgan und das Volumenstrommessgerät im zentralen Kanal angeordnet sind. Durch die optimale Platzausnutzung im zentralen Kanal ist eine kompakte Bauweise des Anschlusszwischenstücks möglich; Strömungsturbulenzen im Bereich des Volumenstrommessgerätes werden vermieden.

Es ist prinzipiell auch möglich, die Kanäle im Anschlusszwischenstück nichtkonzentrisch anzuordnen.

Bei einer vorteilhaften Weiterbildung dieser Ausführungsform ist dem zentralen Kanal ein seinen Durchströmungsquerschnitt beeinflussendes bewegbares Steuerelement zugeordnet, wobei das Steuerelement in Durchflussrichtung unmittelbar vor dem Volumenstrommessgerät angeordnet ist. Das Steuerelement gibt volumenstromabhängig bei kleinen Volumenströmen im zentralen Kanal nur einen kleinen Querschnitt frei, so dass der Volumenstrom gebündelt und gezielt auf einen Punkt des Volumenstrommessgerätes geleitet wird. Hierdurch wird das Strömen von Wasser bereits bei geringen Durchflüssen sensibel registriert, der Anlaufwert des Messgerätes ist entsprechend klein. Der relativ große Druckverlust in dieser Funktionsphase hat bei Volumenströmen, die im Promille- bzw. Prozentbereich des Nennvolumenstromes (maximaler Messvolumenstrom) liegen, naturgemäß keine Bedeutung. Bei größeren Volumenströmen gibt das Steuerelement einen größeren bzw. den kompletten Querschnitt des zentralen Kanals frei. Die Strömung trifft gleichmäßig auf das Volumenstrommessgerät. Dies bewirkt eine Linearität in einem großen Messwertbereich. Zudem ist der Druckverlust auch bei größeren Durchflüssen gering.

Bei einer bevorzugten Weiterentwicklung dieser Weiterbildung umfasst das Steuerelement ein Ventil mit einem Ventilssitz und einem beweglichen Ventilelement, vorzugsweise einem Ventilkegel, wobei das bewegliche Ventilelement mittels einer Feder gegen den Ventilsitz gedrückt wird. Hierzu können Teile eines Standard-Rückflussverhinderers verwendet werden, was eine preiswerte Herstellung ermöglicht.

Bei einer besonders bevorzugten, weiteren Weiterentwicklung enthält das Steuerelement einen als Düse ausgebildeten Kanal. Die Düse kann als einfache Bohrung innerhalb des Steuerelements realisiert werden. Das Wasser fließt bei kleinen Volumenströmen lediglich durch diese Düse und trifft gebündelt auf das Volumenstrommessgerät.

Bei einer vorteilhaften Ausgestaltung davon ist der als Düse ausgebildete Kanal innerhalb des beweglichen Ventilelements angeordnet, insbesondere wobei der als Düse ausgebildete Kanal zentrisch und mittig innerhalb des beweglichen Ventilelements ausgebildet ist. Dies vereinfacht die Fertigung und erleichtert den Einbau und die Justage des Steuerelements.

Bei einer bevorzugten Ausführungsform des erfindungsgemäßen Anschlusszwischenstücks ist das Volumenstrommessgerät als Turbinenwasserzähler ausgebildet. Turbinenwasserzähler sind preiswert und haben eine kompakte Bauweise. Durch tangentiale Anströmung der Turbine kann bei Turbinenwasserzählern ein besonders niedriger Anlaufwert realisiert werden.

Eine besonders bevorzugte Weiterbildung dieser Ausführungsform zeichnet sich dadurch aus, dass der Turbinenwasserzähler ein Turbinenrad mit einem magnetisierten Bereich oder einem integrierten Permanentmagneten aufweist, und dass ein Magnetfeld-Sensor, insbesondere eine Hall-Sonde, in einem Bereich in der Nähe des Turbinenrades angeordnet ist, mit dem vom rotierenden Turbinenrad hervorgerufene magnetische Wechselfelder gemessen und die aufgenommenen Messsignale der elektronischen Steuervorrichtung übermittelt werden können. Die elektronische Steuervorrichtung wertet die Messsignale aus, vergleicht diese mit programmierbaren und gespeicherten Sollwerten und schließt gegebenenfalls das Verschlussorgan, falls Abweichungen festgestellt werden. Abweichungen können beispielsweise durch Leckagen entstehen, die zu besonders hohen oder permanenten Entnahmen führen.

Bei einer weiteren vorteilhaften Ausführungsform ist in Fließrichtung vor dem Turbinenrad eine Anströmhilfe vorgesehen, die die Strömung bei geöffnetem Ventilelement so fokussiert, dass die Turbinenschaufeln des Turbinenrades zumindest annähernd tangential angeströmt werden. Dadurch werden turbulente Strömungen reduziert und die Rotation des vom zuströmenden Medium angetriebenen Turbinenrades optimiert. Dies ermöglicht eine besonders hohe Linearität der Volumenstrommessung in einem großen Messwertbereich.

Vorteilhaft ist bei einer weiteren Ausführungsform das Verschlussorgan als Kugelhahn ausgebildet. Kugelhähne sind preiswert und schließen dauerhaft zuverlässig.

Bei einer bevorzugten Ausführungsform ist am weiteren Anschluss des Anschlusszwischenstücks ein Wasserbehandlungsgerät, insbesondere ein Filter, angeschlossen. Filter sind nach DIN 1988 in jedem Haus vorgeschrieben. Das Anschlusszwischenstück kann einfach und schnell an einen bereits vorhandenen Anschluss zwischen Rohrleitung und Filter montiert werden. So ist ohne großen Montageaufwand die Wasserschadenschutzvorrichtung - auch nachträglich - einbaubar. Ebenso kann das Anschlusszwischenstück auch zwischen Rohrleitung und einem anderen Wasserbehandlungsgerät wie z.B. einer Hauswasserstation, einem Enthärter oder einem physikalischen Kalkschutzgerät montiert werden. Die Wasserschadenschutzvorrichtung ist also universell einsetzbar und schützt neben dem angeschlossenen Wasserbehandlungsgerät die komplette nachfolgende Installation.

Alternativ kann bei einer anderen Ausführungsform am weiteren Anschluss des Anschlusszwischenstücks eine Umlenkplatte angeschlossen sein. Die Umlenkplatte schließt das Anschlusszwischenstück sozusagen kurz, beispielsweise wird die Strömung vom zentralen Kanal direkt in den Ringkanal umgelenkt. Das Anschlusszwischenstücks und damit die Wasserschadenschutzvorrichtung kann somit auch separat ohne Wasserbehandlungsgerät an die Rohrleitung eines Wassernetzes eingebaut werden.

Bevorzugt ist auch eine Ausführungsform des erfindungsgemäßen Anschlusszwischenstücks, bei der Gewindestangen vorgesehen sind, durch die das Anschlusszwischenstück dicht zwischen das Anschlussstück und das Wasserbehandlungsgerät eingespannt werden kann. Dadurch ist eine besonders einfache Montage möglich. Das Anschlusszwischenstück und das Wasserbehandlungsgerät können gleichzeitig (d.h. in einem Montageschritt) am Anschlussstück fixiert werden, wobei das Anschlusszwischenstück zwischen dem Wasserbehandlungsgerät und dem Anschlussstück eingeklemmt wird.

Eine bevorzugte Weiterbildung dieser Ausführungsform sieht vor, dass das Anschlusszwischenstück Bohrungen aufweist, durch die die Gewindestangen geführt sind. Dadurch wird eine Verdrehsicherung erreicht. Die Bohrungen sind bevorzugt gleichmäßig an der Außenseite des Anschlusszwischenstücks verteilt, insbesondere einander gegenüberliegend.

Eine andere, bevorzugte Ausführungsform ist dadurch gekennzeichnet, dass der Anschluss als Flansch und der weitere Anschluss als weiterer Flansch ausgebildet ist, so dass am weiteren Flansch ein als Gegenflansch ausgebildeter Gegenanschluss des Wasserbehandlungsgeräts anschließbar ist. Das Anschlusszwischenstück hat dann einen einfachen Aufbau. Flansch und weiterer Flansch können separat montiert werden. Anschlussstück und Wasserbehandlungsgerät brauchen für die Montage baulich nicht aufeinander abgestimmt zu sein.

In den Rahmen der Erfindung fällt auch ein Verfahren zum Betrieb des oben geschilderten erfindungsgemäßen Anschlusszwischenstücks, welches vorsieht, dass das Volumenstrommessgerät elektrische Messsignale in Abhängigkeit vom Volumenstrom abgibt und der elektronischen Steuervorrichtung zuführt, und dass die elektronische Steuervorrichtung aufgrund eines vorgebbaren, gespeicherten Programms in Abhängigkeit von den empfangenen Messsignalen Steuersignale an den Stellmotor abgibt, die ein Schließen des Verschlussorgans bewirken, wenn ein vorgebbarer Grenzwert des Volumenstroms überschritten wird. Dadurch wird die nachfolgende Installation sowie deren Umgebung vor Schäden durch unkontrollierten Wasserfluss und Wasseraustritt geschützt. Als Grenzwert des Volumenstroms kommen insbesondere in Betracht
- ein maximaler, aktueller Volumenstrom, oder auch
- eine maximale Dauer von anhaltender Wasserentnahme, oder auch
- eine innerhalb einer vorangegangenen, längeren Kontrollzeit (typischerweise zwischen 5 Minuten und zwei Stunden) maximale, durchgeflossene Wassermenge.

Besonders vorteilhaft ist eine Verfahrensvariante, bei der das durch eine Grenzwertüberschreitung geschlossene Verschlussorgan nach einer gewissen Verschlusszeit automatisch wieder geöffnet wird und offengehalten wird, sofern der Volumenstrom nach dem Öffnen kleiner ist als vor dem Verschließen oder auf 0 1/h abgesunken ist, jedoch sofort wieder verschlossen wird, wenn dies nicht der Fall ist. Dadurch hat der Benutzer die Möglichkeit, mit der elektronischen Steuervorrichtung zu kommunizieren. Sollte er beispielsweise zu lange Wasser gezapft oder einen maximal zulässigen Volumenstrom überschritten haben, so schließt zwar das Verschlussorgan zunächst die Zuleitung, kann jedoch nach einer kurzen Zeit, sobald die elektronische Steuervorrichtung registriert hat, dass kein echter Schadensfall vorliegt, das Wassernetz wieder freigeben.

Vorteilhaft wird das Anschlusszwischenstück zwischen dem Wasserbehandlungsgerät und dem in der Rohrleitung angebrachten Anschlussstück eingebaut und als Wasserschadenschutzvorrichtung verwendet. Das Anschlusszwischenstück und somit die Wasserschadenschutzvorrichtung sind dadurch in jedes Hauswassernetz ohne großen Montageaufwand einsetzbar, da ein bereits vorhandener Anschluss für einen nach DIN 1988 vorgeschrieben Filter verwendet werden kann.

Alternativ kann das Anschlusszwischenstück am Anschluss zum Anschließen des Wasserbehandlungsgerätes mit einer Umlenkplatte verschlossen und als Wasserschadenschutzvorrichtung verwendet werden. Das Anschlusszwischenstück kann so auch ohne Wasserbehandlungsgerät eingebaut werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Zeichnung und detaillierte Beschreibung der Erfindung

Die Erfindung ist in der Zeichnung dargestellt und wird anhand eines Ausführungsbeispiels näher erläutert. Es zeigen:
- Fig. 1: einen Längsschnitt durch eine Ausführungsform des Anschlusszwischenstücks bei großem Volumenstrom;
- Fig. 2: einen Schnitt durch Fig. 1 entlang A-A;
- Fig. 3: einen Längsschnitt durch die Ausführungsform des Anschlusszwischenstücks von Fig. 1 bei kleinem Volumenstrom;
- Fig. 4: eine Draufsicht von oben auf die Ausführungsform des Anschlusszwischenstücks von Fig. 1 mit angeschlossenem Filter, und installiert an einer Rohrleitung;
- Fig. 5: eine Draufsicht von oben auf eine Ausführungsform ähnlich Fig. 4, jedoch mit Einspannung des Anschlusszwischenstücks zwischen dem Anschlussstück und dem Filter mittels Gewindestangen.

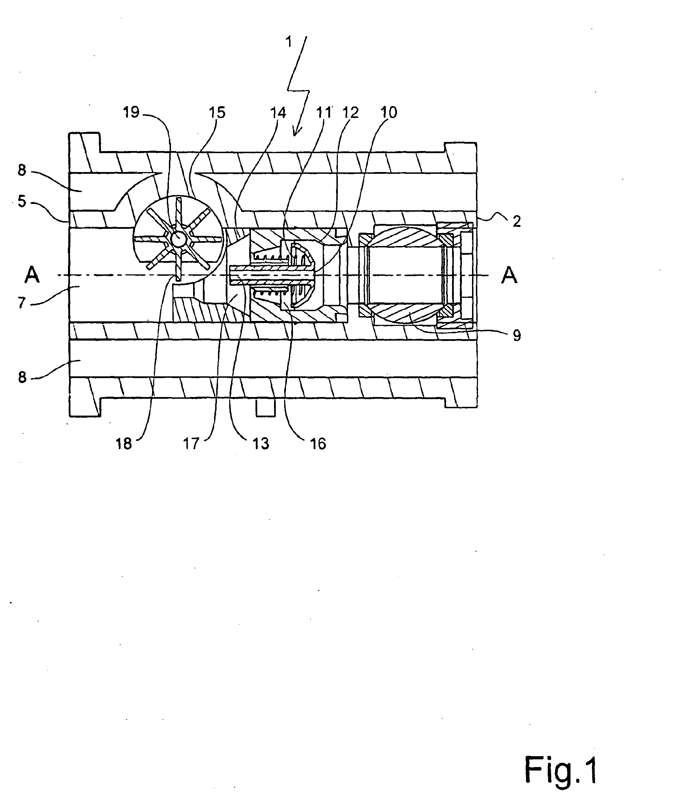

Eine vorteilhafte Ausführungsform der Erfindung ist beispielhaft in den **Fig. 1 bis 4** dargestellt.

Diese Ausführungsform des Anschlusszwischenstücks **1** umfasst einen Anschluss **2** (hier ausgebildet als Flansch), an den ein in einer Rohrleitung **3** angebrachtes Anschlussstück **4** angeschlossen ist, sowie einen weiteren Anschluss **5** (hier ausgebildet als weiterer Flansch), an den ein Filter oder ein anderes Wasserbehandlungsgerät **6** (oder auch eine Umlenkplatte) angeschlossen ist. Ein parallel zur Längsachse A-A des Anschlusszwischenstückes 1 verlaufender zentraler Kanal 7 verbindet den Wasserzulauf des Anschlussstückes 4 mit dem Zulauf für das Wasserbehandlungsgerät 6, während ein den zentralen Kanal 7 umgebenden Ringkanal **8** den Wasserablauf des Wasserbehandlungsgerätes 6 mit dem Wasserablauf des Anschlussstückes 4 verbindet. Im zentralen Kanal 7 sind in Durchflussrichtung (in Fig. 1 von rechts nach links) nacheinander ein Verschlussorgan **9,** ein den Durchströmungsquerschnitt des zentralen Kanals 7 beeinflussendes Steuerelement **10, 11, 12, 13,** eine Anströmhilfe **14** sowie ein als Turbinenwasserzähler ausgestaltetes Volumenstrommessgerät **15** angeordnet. Das Verschlussorgan 9 befindet sich demnach bezüglich der Flussrichtung vor dem Wasserbehandlungsgerät 6.

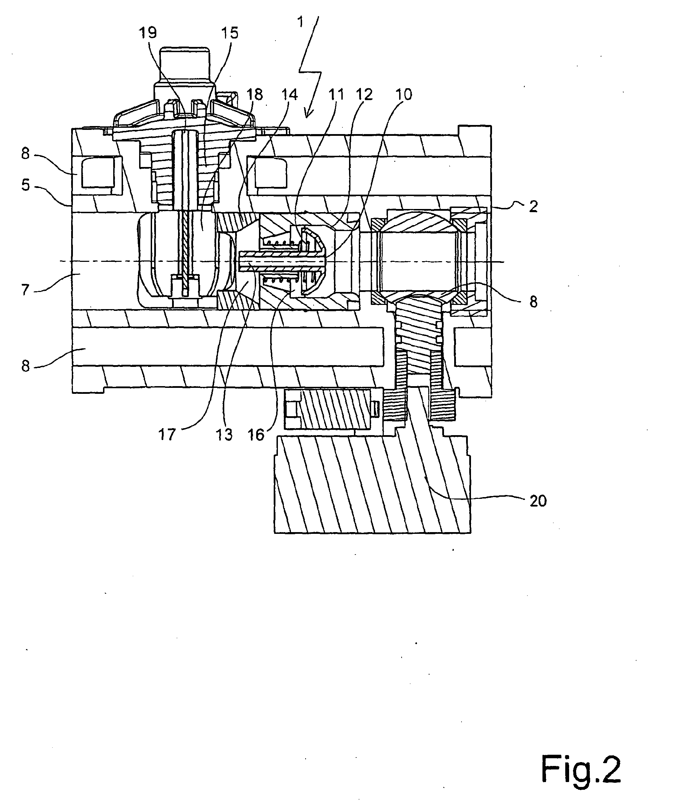

Bei großem Volumenstrom (**Fig. 1****,** **2**) fließt Wasser durch das geöffnete Verschlussorgan 9 und trifft auf das bewegliche Ventilelement 10. Dies wird bei großem Volumenstrom gegen die Kraft der Feder 11 weg vom Ventilsitz 12 gedrückt, so dass das Wasser zwischen Ventilelement 10 und Ventilsitz 12 hindurchtreten kann und somit über einen vollen Bypass-Querschnitt **16** in einen Vorraum **17** des Turbinenwasserzählers 15 eintreten kann. Hier wird der Volumenstrom durch die Anströmhilfe 14 so fokussiert, dass die Turbinenschaufeln **18** des Turbinenwasserzählers 15 zumindest annähernd tangential angeströmt werden. Dies erhöht die Empfindlichkeit und Linearität des Turbinenwasserzählers 15. Die Durchströmung des Anschlusszwischenstücks durch den geraden, zentralen Kanal 7 ohne nennenswerte Umlenkungen ermöglicht eine laminare Strömung, was die Zuverlässigkeit und Linearität des Turbinenwasserzählers 15 über einen großen Durchflussbereich beträchtlich erhöht.

Ebenso erlaubt die beschriebene Anordnung der einzelnen Komponenten innerhalb des Anschlusszwischenstücks eine kompakte Bauweise, so dass das Anschlusszwischenstück problemlos zwischen ein bereits vorhandenes Wasserbehandlungsgerät 6 und die Rohrleitung 3 eingebaut werden kann.

Das einen magnetisierten Bereich aufweisende Turbinenrad **19** des Turbinenwasserzählers 15 erzeugt bei Rotation magnetische Wechselfelder, die von einer in der Nähe des Turbinenrades 19 angeordneten, in der Zeichnung nicht näher dargestellten Hall-Sonde gemessen werden. Die aufgenommenen Signale werden einer elektronischen Steuervorrichtung **22** übermittelt. Diese vergleicht die Signale mit einem vorgebbaren, gespeicherten Programm. Bei unerwartetem, ungewöhnlich hohem oder lang andauerndem Wasserfluss durch das Anschlusszwischenstück 1 und die nachfolgende Installation (z.B. bei einer Leckage) kann die elektronische Steuervorrichtung 22 einen Stellmotor 20 betätigen, der das Verschlussorgan 9 schließt.

Bei geschlossenem Verschlussorgan 9 ist der Wasserfluss durch den zentralen Kanal 7 blockiert; aus der Rohrleitung 3 bzw. durch das Anschlussstück 4 zulaufendes Wasser wird im Anschlusszwischenstück 1 vollständig gestoppt. Zulaufendes Wasser kann bei geschlossenem Verschlussorgan 9 weder zum Wasserbehandlungsgerät 6 (hier Filter 21) noch zum Wasserablauf des Anschlussstücks 4 bzw. zur Rohrleitung 3 gelangen.

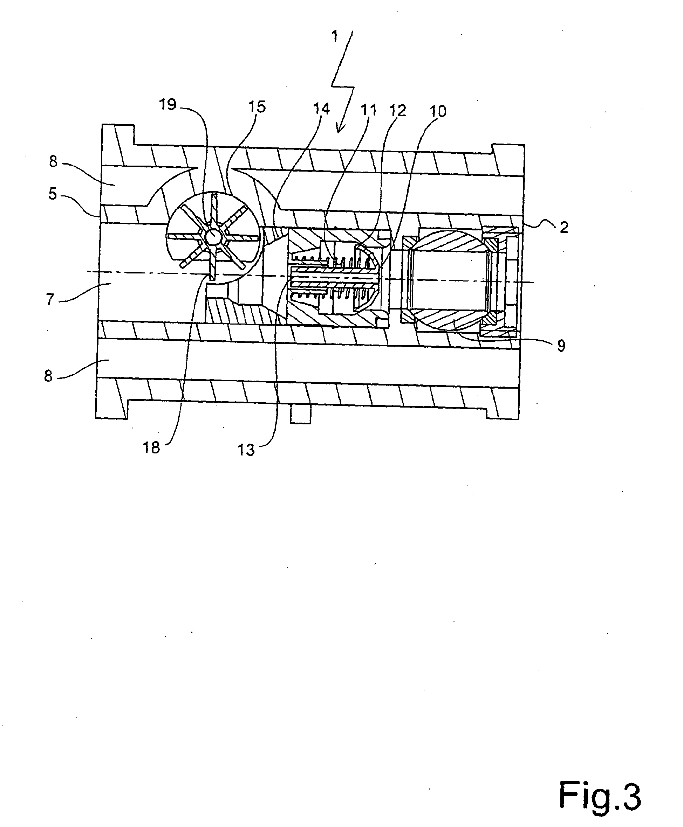

Bei kleinem Volumenstrom **(****Fig. 3****)** kann das Wasser nicht zwischen Ventilelement 10 und Ventilsitz 12 hindurchströmen, da die Feder 11 das Ventilelement in den Ventilsitz 12 presst und somit für das strömende Wasser nur noch ein Kanal 13 offen ist. In diesem Kanal 13 mit 1-3 mm Durchmesser wird das strömende Wasser wie durch eine Düse gebündelt, beschleunigt und auf die Turbinenschaufeln 18 geleitet. Dadurch erfährt der Turbinenwasserzähler 15 einen besonders niedrigen Anlaufwert. Dies ist besonders wichtig, wenn auch schleichende Wasserverluste in der nachfolgenden Installation wie beispielsweise bei kleinen Undichtigkeiten erkannt werden sollen. In diesem Fall schließt das Verschlussorgan 9 ebenfalls und Wasserschäden werden vermieden.

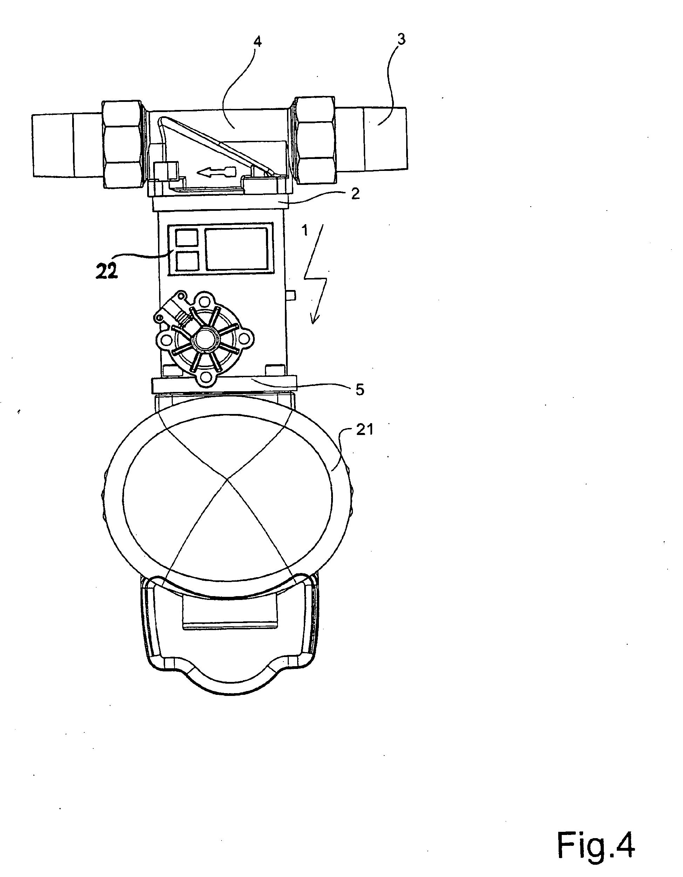

In **Fig. 4** ist ein an das Anschlusszwischenstück 1 angeschlossener Filter **21** in der Draufsicht von oben dargestellt. Das Anschlusszwischenstück 1 ist zwischen dem in der Rohrleitung 3 angebrachten Anschlussstück 4 für den Filter 21 und dem Filter 21 eingebaut. Es schützt den Filter 21 und die nachfolgende Installation.

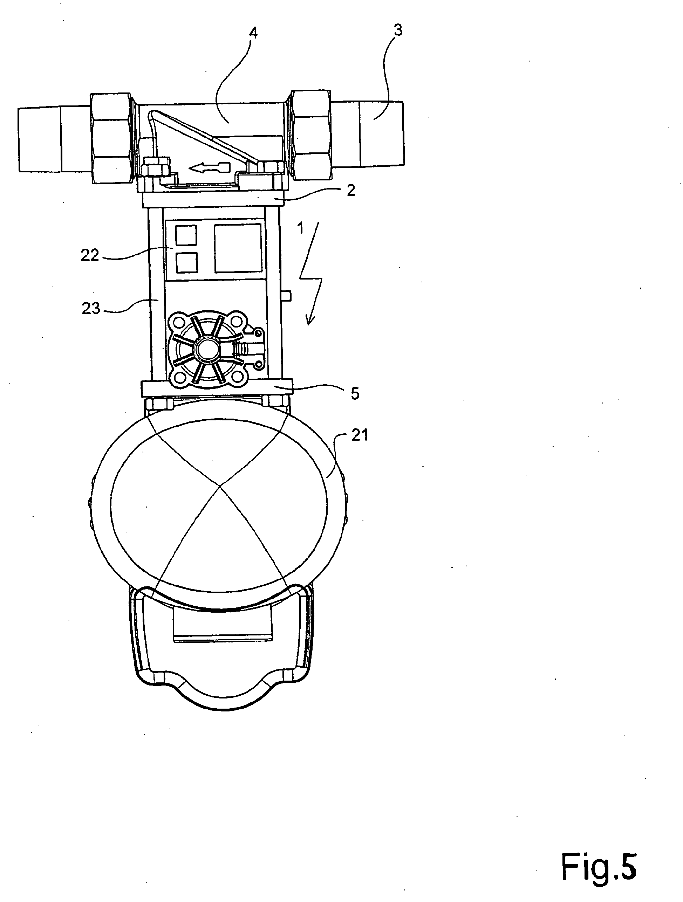

In einer speziellen Ausführungsform, dargestellt in **Fig. 5****,** ist das Anschlusszwischenstück 1 zwischen dem in der Rohrleitung 3 angebrachten Anschlussstück **4** für den Filter 21 und dem Filter 21 mittels Gewindestangen **23** eingespannt.

Die Ausgestaltung einer Wasserschadenschutzvorrichtung als Anschlusszwischenstück 1 ermöglicht den einfachen und kostengünstigen Einbau einer solchen Vorrichtung in jede Installation unter Verwendung eines bereits vorhandenen Anschlussstückes.

### Bezugszeichenliste

- 1: Anschlusszwischenstück
- 2: Anschluss
- 3: Rohrleitung
- 4: Anschlussstück
- 5: weiterer Anschluss
- 6: Wasserbehandlungsgerät
- 7: zentraler Kanal
- 8: Ringkanal
- 9: Verschlussorgan
- 10: bewegliches Ventilelement
- 11: Feder
- 12: Ventilsitz
- 13: Kanal
- 14: Anströmhilfe
- 15: Turbinenwasserzähler
- 16: Bypass-Querschnitt
- 17: Vorraum
- 18: Turbinenschaufeln
- 19: Turbinenrad
- 20: Stellmotor
- 21: Filter
- 22: elektronische Steuervorrichtung
- 23: Gewindestangen

## Patentansprüche

1. Anschlusszwischenstück (1) zum Anbau eines Wasserbehandlungsgerätes (6) an eine Rohrleitung (3) eines Wassernetzes, insbesondere eines Hauswassernetzes,
wobei das Anschlusszwischenstück (1) aufweist:
- einen Anschluss (2) zum Anschließen des Anschlusszwischenstückes (1) an die Rohrleitung (3), insbesondere an ein in der Rohrleitung (3) angebrachtes Anschlussstück (4),
- einen weiteren Anschluss (5) zum Anschließen des Wasserbehandlungsgerätes (6) an das Anschlusszwischenstück (1) mit einem dazu passenden Gegenanschluss,
- mehrere Kanäle (7, 8), zum Verbinden der Rohrleitung (3) des Wassernetzes mit dem Wasserbehandlungsgerät (6),
- in den Kanälen (7, 8) sind ein Volumenstrommessgerät (15) sowie ein Verschlussorgan (9) angeordnet , **dadurch gekennzeichnet,**
**dass** eine elektronische Steuervorrichtung (22), die Messsignale vom Volumenstrommessgerät (15) erhält, sowie ein Stellmotor (20) vorgesehen sind, durch die das Verschlussorgan (9) geschlossen bzw. geöffnet werden kann,
**dass** die Kanäle (7, 8) einen zentralen Kanal (7) sowie einen den zentralen Kanal (7) umgebenden Ringkanal (8) umfassen, wobei das Verschlussorgan (9) und das Volumenstrommessgerät (15) im zentralen Kanal (7) angeordnet sind, und wobei der zentrale Kanal im Anschlusszwischenstück (1) zumindest annähernd geradlinig verläuft.

2. Anschlusszwischenstück (1) nach Anspruch 1,
**dadurch gekennzeichnet,**
**dass** dem zentralen Kanal (7) ein seinen Durchströmungsquerschnitt beeinflussendes bewegbares Steuerelement (10, 11, 12, 13) zugeordnet ist, wobei das Steuerelement (10, 11, 12, 13) in Durchflussrichtung unmittelbar vor dem Volumenstrommessgerät (15) angeordnet ist.

3. Anschlusszwischenstück (1) nach Anspruch 2,
**dadurch gekennzeichnet,**
**dass** das Steuerelement (10, 11, 12, 13) ein Ventil mit einem Ventilssitz (12) und einem beweglichen Ventilelement (10), vorzugsweise einem Ventilkegel, umfasst, wobei das bewegliche Ventilelement (10) mittels einer Feder (11) gegen den Ventilsitz (12) gedrückt wird.

4. Anschlusszwischenstück (1) nach Anspruch 2 oder 3,
**dadurch gekennzeichnet,**
**dass** das Steuerelement (10, 11, 12, 13) einen als Düse ausgebildeten Kanal (13) enthält.

5. Anschlusszwischenstück (1) nach Anspruch 4,
**dadurch gekennzeichnet,**
**dass** der als Düse ausgebildete Kanal (13) innerhalb des beweglichen Ventilelementes (10) angeordnet ist, insbesondere wobei der als Düse ausgebildete Kanal (13) zentrisch und mittig innerhalb des beweglichen Ventilelements (10) ausgebildet ist.

6. Anschlusszwischenstück (1) nach einem der vorhergehenden Ansprüche,
**dadurch gekennzeichnet,**
**dass** das Volumenstrommessgerät (15) als Turbinenwasserzähler ausgebildet ist.

7. Anschlusszwischenstück nach Anspruch 6,
**dadurch gekennzeichnet,**
**dass** der Turbinenwasserzähler (15) ein Turbinenrad (19) mit einem magnetisierten Bereich oder einem integrierten Permanentmagneten aufweist,
und **dass** ein Magnetfeld-Sensor, insbesondere eine Hall-Sonde, in einem Bereich in der Nähe des Turbinenrades (19) angeordnet ist, mit dem vom rotierenden Turbinenrad (19) hervorgerufene magnetische Wechselfelder gemessen und die aufgenommenen Signale der elektronischen Steuervorrichtung übermittelt werden können.

8. Anschlusszwischenstück (1) nach einem der vorhergehenden Ansprüche,
**dadurch gekennzeichnet,**
**dass** in Fließrichtung vor dem Turbinenrad (19) eine Anströmhilfe (14) vorgesehen ist, die die Strömung bei geöffnetem Ventilelement (10) so fokussiert, dass die Turbinenschaufeln (18) des Turbinenrades (19) zumindest annähernd tangential angeströmt werden.

9. Anschlusszwischenstück (1) nach einem der vorhergehenden Ansprüche,
**dadurch gekennzeichnet,**
**dass** das Verschlussorgan (9) als Kugelhahn ausgebildet ist.

10. Anschlusszwischenstück (1) nach einem der vorhergehenden Ansprüche, **dadurch gekennzeichnet, dass** Gewindestangen (23) vorgesehen sind, durch die das Anschlusszwischenstück (1) dicht zwischen das Anschlussstück (4) und das Wasserbehandlungsgerät (6) eingespannt werden kann.

11. Anschlusszwischenstück (1) nach Anspruch 10, **dadurch gekennzeichnet, dass** das Anschlusszwischenstück (1) Bohrungen aufweist, durch die die Gewindestangen (23) geführt sind.

12. Anschlusszwischenstück (1) nach einem der vorhergehenden Ansprüche, **dadurch gekennzeichnet, dass** der Anschluss (2) als Flansch und der weitere Anschluss (5) als weiterer Flansch ausgebildet ist, so dass am weiteren Flansch ein als Gegenflansch ausgebildeter Gegenanschluss des Wasserbehandlungsgeräts (6) anschließbar ist.

13. Verwendung eines Anschlusszwischenstücks nach einem der Ansprüche 1 bis 12,
**dadurch gekennzeichnet,**
**dass** am weiteren Anschluss (5) des Anschlusszwischenstücks (1) ein Wasserbehandlungsgerät (6), insbesondere ein Filter (21), angeschlossen ist.

14. Verwendung eines Anschlusszwischenstücks (1) nach einem der Ansprüche 1 bis 12,
**dadurch gekennzeichnet,**
**dass** am weiteren Anschluss (5) des Anschlusszwischenstücks (1) eine Umlenkplatte angeschlossen ist.

15. verfahren zum Betrieb eines Anschlusszwischenstücks (1) nach einem der Ansprüche 1 bis 12,
**dadurch gekennzeichnet,**
**dass** das Volumenstrommessgerät (15) elektrische Messsignale in Abhängigkeit vom Volumenstrom abgibt und der elektronischen Steuervorrichtung (22) zuführt,
und **dass** die elektronische Steuervorrichtung (22) aufgrund eines vorgebbaren, gespeicherten Programms in Abhängigkeit von den empfangenen Messsignalen Steuersignale an den Stellmotor (20) abgibt, die ein Schließen des Verschlussorgans (9) bewirken, wenn ein vorgebbarer Grenzwert des Volumenstroms überschritten wird.

16. Verfahren nach Anspruch 15,
**dadurch gekennzeichnet,**
**dass** das durch eine Grenzwertüberschreitung geschlossene Verschlussorgan (9) nach einer gewissen Verschlusszeit automatisch wieder geöffnet wird und offengehalten wird, sofern der Volumenstrom nach dem Öffnen kleiner ist als vor dem Verschließen oder auf 0 I/h abgesunken ist, jedoch sofort wieder verschlossen wird, wenn dies nicht der Fall ist.

17. Verfahren nach Anspruch 15 oder 16,
**dadurch gekennzeichnet,**
**dass** das Anschlusszwischenstück (1) zwischen dem Wasserbehandlungsgerät (6) und dem Anschlussstück (4) eingebaut wird und als Wasserschadenschutzvorrichtung verwendet wird.

18. Verfahren nach Anspruch 15 oder 16,
**dadurch gekennzeichnet,**
**dass** das Anschlusszwischenstück (1) am weiteren Anschluss (5) mit einer Umlenkplatte verschlossen und als Wasserschadenschutzvorrichtung verwendet wird.

## Claims

1. Intermediate connector piece (1) for fitting a water processing device (6) to a pipeline (3) of a water network, in particular a domestic water network, the intermediate connector piece (1) having:
- a connector (2) for connecting the intermediate connector piece (1) to the pipeline (3), in particular to a connector piece (4) fitted in the pipeline (3),
- an additional connector (5) for connecting the water processing device (6) to the intermediate connector piece (1) with a corresponding counter-connector,
- a plurality of conduits (7, 8) for connecting the pipeline (3) of the water network to the water processing device (6),
- a volume flow measurement device (15) and a closure member (9) are arranged in the conduits (7, 8),
**characterised in that** there are provided an electronic control device (22) which acquires measurement signals from the volume flow measurement device (15) and a servomotor (20), by means of which the closure member (9) can be closed or opened,
**in that** the conduits (7, 8) comprise a central conduit (7) and an annular conduit (8) which surrounds the central conduit (7), the closure member (9) and the volume flow measurement device (15) being arranged in the central conduit (7) and the central conduit extending in the intermediate connector piece (1) in at least a substantially rectilinear manner.

2. Intermediate connector piece (1) according to claim 1,
**characterised in that**
a movable control element (10, 11, 12, 13) is associated with the central conduit (7) and influences the flow cross-section thereof, the control element (10, 11, 12, 13) being arranged directly upstream of the volume flow measurement device (15) in the direction of flow.

3. Intermediate connector piece (1) according to claim 2,
**characterised in that**
the control element (10, 11, 12, 13) comprises a valve having a valve seat (12) and a movable valve element (10), preferably a valve cone, the movable valve element (10) being urged by means of a spring (11) against the valve seat (12).

4. Intermediate connector piece (1) according to claim 2 or claim 3,
**characterised in that**
the control element (10, 11, 12, 13) contains a conduit (13) in the form of a nozzle.

5. Intermediate connector piece (1) according to claim 4,
**characterised in that**
the conduit (13) in the form of a nozzle is arranged inside the movable valve element (10), in particular with the conduit (13) in the form of a nozzle being constructed centrally and concentrically inside the movable valve element (10).

6. Intermediate connector piece (1) according to any one of the preceding claims,
**characterised in that**
the volume flow measurement device (15) is in the form of a turbine water meter.

7. Intermediate connector piece according to claim 6,
**characterised in that**
the turbine water meter (15) has a turbine wheel (19) having a magnetised region or an integrated permanent magnet, and **in that** there is arranged in a region near the turbine wheel (19) a magnetic field sensor, in particular a Hall probe, with which magnetic alternating fields produced by the rotating turbine wheel (19) can be measured and the signals received can be transmitted to the electronic control device.

8. Intermediate connector piece (1) according to any one of the preceding claims,
**characterised in that**
there is provided, upstream of the turbine wheel (19) in the direction of flow, a flow aid (14) which focuses the flow when the valve element (10) is opened in such a manner that flow acts against the turbine blades (18) of the turbine wheel (19) in at least a substantially tangential manner.

9. Intermediate connector piece (1) according to any one of the preceding claims,
**characterised in that**
the closure member (9) is in the form of a ball valve.

10. Intermediate connector piece (1) according to any one of the preceding claims, **characterised in that** there are provided threaded rods (23), by which the intermediate connector piece (1) can be clamped tightly between the connector piece (4) and the water processing device (6).

11. Intermediate connector piece (1) according to claim 10,
**characterised in that** the intermediate connector piece (1) has holes, through which the threaded rods (23) extend.

12. Intermediate connector piece (1) according to any one of the preceding claims, **characterised in that** the connector (2) is in the form of a flange and the additional connector (5) is in the form of an additional flange so that a counter-connector of the water processing device (6) can be connected to the additional flange, which counter-connector is in the form of a counter-flange.

13. Use of an intermediate connector piece according to any one of claims 1 to 12,
**characterised in that**
a water processing device (6), in particular a filter (21), is connected to the additional connector (5) of the intermediate connector piece (1).

14. Use of an intermediate connector piece (1) according to any one of claims 1 to 12,
**characterised in that**
a redirecting plate is connected to the additional connector (5) of the intermediate connector piece (1).

15. Method for operating an intermediate connector piece (1) according to any one of claims 1 to 12,
**characterised in that**
the volume flow measurement device (15) emits electrical measurement signals in accordance with the volume flow and supplies them to the electronic control device (22), and **in that** the electronic control device (22) transmits to the servomotor (20), on the basis of a predeterminable stored programme in accordance with the measurement signals received, control signals which bring about closure of the closure member (9) if a predeterminable limit value of the volume flow is exceeded.

16. Method according to claim 15,
**characterised in that**
the closure member (9) which is closed by a limit value being exceeded is automatically opened again after a specific closure time and is kept in the open state as long as the volume flow after the opening action is smaller than before the closing action or has decreased to 0 1/h, but is immediately closed again otherwise.

17. Method according to claim 15 or claim 16,
**characterised in that**
the intermediate connector piece (1) is fitted between the water processing device (6) and the connector piece (4) and is used as a water damage protection device.

18. Method according to claim 15 or claim 16,
**characterised in that**
the intermediate connector piece (1) is closed at the additional connector (5) with a redirecting plate and is used as a water damage protection device.

## Revendications

1. Pièce intercalaire de raccordement (1) pour relier un appareil de traitement d'eau (6) à une tuyauterie (3) d'un réseau de distribution d'eau, en particulier d'un réseau de distribution d'eau domestique, la pièce intercalaire de raccordement (1) présentant:
- un raccord (2) pour le raccordement de la pièce intercalaire de raccordement (1) à la tuyauterie (3), en particulier à une pièce de raccordement (4) montée dans la tuyauterie (3),
- un autre raccord (5) pour le raccordement de l'appareil de traitement d'eau (6) à la pièce intercalaire de raccordement (1) avec un contre-raccord assorti,
- plusieurs canaux (7, 8) pour la liaison de la tuyauterie (3) du réseau de distribution d'eau avec l'appareil de traitement d'eau (6),
- un débitmètre volumique (15) ainsi qu'un organe de fermeture (9) disposés dans les canaux (7, 8),
**caractérisée en ce**
**que** sont prévus un dispositif de commande électronique (22) qui reçoit des signaux de mesure du débitmètre volumique (15) ainsi qu'un servomoteur (20), au moyen desquels l'organe de fermeture (9) peut être fermé et ouvert,
**que** les canaux (7, 8) comprennent un canal central (7) ainsi qu'un canal annulaire (8) entourant le canal central (7), l'organe de fermeture (9) et le débitmètre volumique (15) étant disposés dans le canal central (7) et le canal central (7) s'étendant au moins approximativement en ligne droite dans la pièce intercalaire de raccordement (1).

2. Pièce intercalaire de raccordement (1) selon la revendication 1,
**caractérisée en ce**
**qu'**au canal central (7) est associé un élément de commande mobile (10, 11, 12, 13) qui influence sa section de passage, l'élément de commande (10, 11, 12, 13) étant disposé immédiatement avant le débitmètre volumique (15) dans la direction d'écoulement.

3. Pièce intercalaire de raccordement (1) selon la revendication 2,
**caractérisée en ce**
**que** l'élément de commande (10, 11, 12, 13) comprend une soupape avec un siège de soupape (12) et un élément de soupape mobile (10), de préférence un cône de soupape, l'élément de soupape mobile (10) étant poussé contre le siège de soupape (12) au moyen d'un ressort (11).

4. Pièce intercalaire de raccordement (1) selon la revendication 2 ou 3,
**caractérisée en ce**
**que** l'élément de commande (10, 11, 12, 13) contient un canal (13) réalisé sous forme de buse.

5. Pièce intercalaire de raccordement (1) selon la revendication 4,
**caractérisée en ce**
**que** le canal (13) réalisé sous forme de buse est disposé à l'intérieur de l'élément de soupape mobile (10), le canal (13) réalisé sous forme de buse étant en particulier centré et en position centrale à l'intérieur de l'élément de soupape mobile (10).

6. Pièce intercalaire de raccordement (1) selon une des revendications précédentes,
**caractérisée en ce**
**que** le débitmètre volumique (15) est réalisé sous forme de compteur d'eau à turbine.

7. Pièce intercalaire de raccordement selon la revendication 6,
**caractérisée en ce**
**que** le compteur d'eau à turbine (15) présente une roue de turbine (19) avec une zone magnétisée ou un aimant permanent intégré,
et **qu'**un capteur de champ magnétique, en particulier une sonde à effet Hall, est disposé dans une zone à proximité de la roue de turbine (19), avec lequel des champs magnétiques alternants créés par la roue de turbine (19) en rotation peuvent être mesurés et les signaux captés transmis au dispositif de commande électronique.

8. Pièce intercalaire de raccordement (1) selon une des revendications précédentes,
**caractérisée en ce**
**qu'**avant la roue de turbine (19) dans la direction d'écoulement est prévu un moyen de guidage de flux (14) qui, lorsque l'élément de soupape (10) est ouvert, focalise l'écoulement de façon qu'il arrive sur les aubes de turbine (18) de la roue de turbine (19) au moins approximativement tangentiellement.

9. Pièce intercalaire de raccordement (1) selon une des revendications précédentes,
**caractérisée en ce**
**que** l'organe de fermeture (9) est réalisé sous forme de robinet à bille.

10. Pièce intercalaire de raccordement selon une des revendications précédentes,
**caractérisée en ce**
**que** des tiges filetées (23) sont prévues, au moyen desquelles la pièce intercalaire de raccordement (1) peut être serrée de manière étanche entre la pièce de raccordement (4) et l'appareil de traitement d'eau (6).

11. Pièce intercalaire de raccordement (1) selon la revendication 10,
**caractérisée en ce**
**que** la pièce intercalaire de raccordement (1) présente des trous à travers lesquels les tiges filetées (23) sont guidées.

12. Pièce intercalaire de raccordement (1) selon une des revendications précédentes, **caractérisée en ce que** le raccord (2) est réalisé sous la forme d'une bride et l'autre raccord (5) sous la forme d'une autre bride, de façon qu'un contre-raccord de l'appareil de traitement d'eau (6) réalisé sous forme de contre-bride puisse être raccordé à l'autre bride.

13. Utilisation d'une pièce intercalaire de raccordement (1) selon une des revendications 1 à 12,
**caractérisée en ce**
**qu'**un appareil de traitement d'eau (6), en particulier un filtre (21), est raccordé à l'autre raccord (5) de la pièce intercalaire de raccordement (1).

14. Utilisation d'une pièce intercalaire de raccordement (1) selon une des revendications 1 à 12,
**caractérisée en ce**
**qu'**une plaque déflectrice est raccordée à l'autre raccord (5) de la pièce intercalaire de raccordement (1).

15. Procédé d'exploitation d'une pièce intercalaire de raccordement (1) selon une des revendications 1 à 12,
**caractérisé en ce**
**que** le débitmètre volumique (15) délivre des signaux de mesure électriques en fonction du débit volumique et les amène au dispositif de commande électronique (22),
et **que** le dispositif de commande électronique (22) délivre en fonction des signaux de mesure reçus, sur la base d'un programme enregistré prédéfinissable, des signaux de commande au servomoteur (20) qui provoquent une fermeture de l'organe de fermeture (9) quand une valeur limite prédéfinissable du débit volumique est dépassée.

16. Procédé selon la revendication 15,
**caractérisé en ce**
**que** l'organe de fermeture (9) fermé par un dépassement de valeur limite est rouvert automatiquement après un certain temps de fermeture et maintenu ouvert si le débit volumique après l'ouverture est inférieur à celui d'avant la fermeture ou a baissé à 01/h, mais immédiatement fermé de nouveau si tel n'est pas le cas.

17. Procédé selon la revendication 15 ou 16,
**caractérisé en ce**
**que** la pièce intercalaire de raccordement (1) est montée entre l'appareil de traitement d'eau (6) et la pièce de raccordement (4) et utilisée comme dispositif de protection contre les dégâts des eaux.

18. Procédé selon la revendication 15 ou 16,
**caractérisé en ce**
**que** le pièce intercalaire de raccordement (1) est fermée à l'autre raccord (5) par une plaque déflectrice et utilisée comme dispositif de protection contre les dégâts des eaux.
